# EUROPEAN PATENT SPECIFICATION

(11) **EP 2 524 669 B1**
(45) Date of publication and mention of the grant of the patent: **04.04.2018**
(21) Application number: 10843245.1
(22) Date of filing: 10.02.2010
(51) Int. Cl.: A61C 19/02, A61C 7/12

(54) **CASE FOR ORTHODONTIC BRACKETS PROVIDED WITH RECESSES HAVING TEETH SHAPE**
GEHÄUSE FÜR BRACKETS MIT ZAHNFÖRMIGEN VERTIEFUNGEN
BOITIER POUR BRACKETS ORTHODONTIQUES DOTÉ DE CAVITÉS EN FORME DE DENT

(30) Priority: 12.01.2010 KR 20100002568
(43) Date of publication of application: 21.11.2012
(73) Proprietor: Dentos Co., Ltd., Daegu 704-900 (KR)
(72) Inventor: KYUNG, Hee-Moon, Daegu 700-721 (KR); PARK, Hyo Sang, Daegu 706-020 (KR)
(74) Representative: Cross, James Peter Archibald
(86) International application number: PCT/KR2010/000809
(87) International publication number: WO 2011/087179

(56) References cited:
- US-A- 5 542 844
- US-A- 5 542 844
- US-A- 5 692 896
- US-A- 5 692 896
- US-A- 5 697 780
- US-A1- 2003 196 914
- US-A1- 2006 068 351
- US-B1- 6 182 820

## Description

### Technical Field

The present invention relates to improvements in an orthodontic bracket case, and more particularly to an orthodontic bracket case, which provides easy identification of orthodontic brackets stored in the case to assist an orthodontist in easily identifying and selecting a desired one of the brackets suitable for a tooth at a glance when attempting to select the bracket from the case and bond and fix the same to an outer surface of the tooth upon orthodontia, thereby achieving improvements in operation convenience and efficiency.

### Background Art

In general, an orthodontic bracket case is devised to store orthodontic brackets that are sorted in various sizes. Thus, upon orthodontia, an orthodontist can conveniently pick up a desired bracket using a bracket holder and bond and fix the bracket to a tooth. The orthodontic bracket case has gained widespread use recently.

Such an orthodontic bracket case, which is in general use, is configured such that circular or angled recesses designated by identification numbers are indented in dual rows in a case main body having a flat plate shape and brackets corresponding to the identification numbers are stored in the respective recesses for later use. An example of such an orthodontic bracket case is found in US5542844A.

However, due to the fact that the recesses indented in the case are simply shaped into circular or angled recesses, selecting a desired bracket corresponding to a tooth upon orthodontia may create inconvenience because the orthodontist must confirm the identification numbers designated to the recesses or identification numbers marked on the brackets one by one.

Moreover, the brackets are simply stored in the recesses of the case, and may be unintentionally moved rather than being aligned correctly in the recesses. This may also create inconvenience when the orthodontist picks up the bracket using the bracket holder.

It is an object of the present invention to provide an orthodontic bracket case, which assists an orthodontist in easily and rapidly identifying and selecting a desired one of brackets stored in recesses of the case, thereby achieving improvements in operation convenience and efficiency, and which ensures that the brackets received in the recesses are aligned at correct positions if necessary without a risk of movement, thereby allowing the orthodontist to conveniently pick up a desired bracket using a bracket holder.

### Statement of the Invention

In accordance with an aspect of the present invention, there is provided an orthodontic bracket case according to claim 1.

In an orthodontic bracket case according to an embodiment of the present invention, recesses for storage of brackets formed in a case main body are shaped according to the sequence of a set of teeth as well as the shapes of teeth, such that brackets corresponding to teeth that have the same shape of the respective recesses are stored in the recesses. In this way, when an orthodontist attempts to select a desired bracket from the case, the orthodontist may easily and rapidly identify and select the desired bracket based on the shape of the recess. Also, in the case in which an adhesive tape is attached to the bottom of the recess, this may ensure that the bracket is stored in the recess at a correctly aligned position, which may result in improvements in operation convenience and efficiency.

### Description of Drawings

FIG. 1 is a perspective view illustrating an orthodontic bracket case according to the present invention;
FIG. 2 is a plan view of FIG. 1;

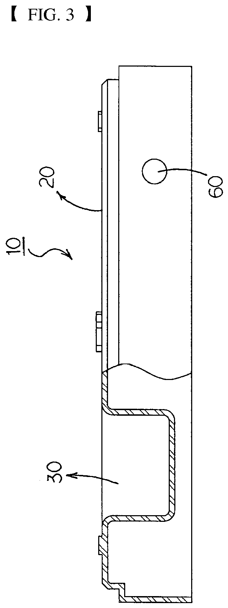

FIG. 3 is a partial side sectional view of FIG. 1;
FIG. 4 is a perspective view illustrating another embodiment of the present invention;

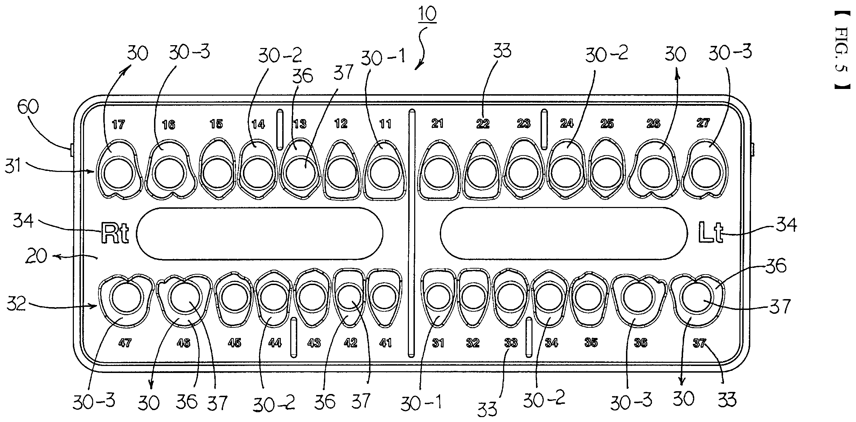

FIG. 5 is a plan view of FIG. 4;

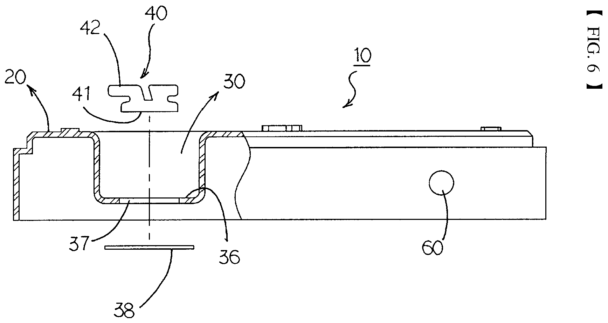

FIG. 6 is a partial sectional view of FIG. 4 illustrating a state in which an orthodontic bracket is detached from an adhesive tape;

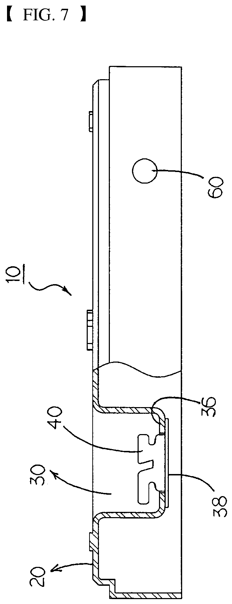

FIG. 7 is a partial sectional view of FIG. 4 illustrating a state in which the orthodontic bracket is attached to the adhesive tape; and
FIG. 8 is a perspective view illustrating a further embodiment of the present invention.

### <Description of reference numerals related to important parts of the drawings>

| | |
|---|---|
| 10: bracket case | 20: main body |
| 30: recess | 30-1: front tooth shaped recess |
| 30-2: canine shaped recess | 30-3: molar shaped recess |
| 31: upper row | 30: lower row |
| 33: identification number | 34: identification character |
| 36: bottom | 37: through-hole |
| 38: adhesive tape | 40: orthodontic bracket |
| 41: adhesive portion | 42: grip portion |

### Description of Exemplary Embodiments

Hereinafter, exemplary embodiments of the present invention will be described in detail with reference to the accompanying drawings.

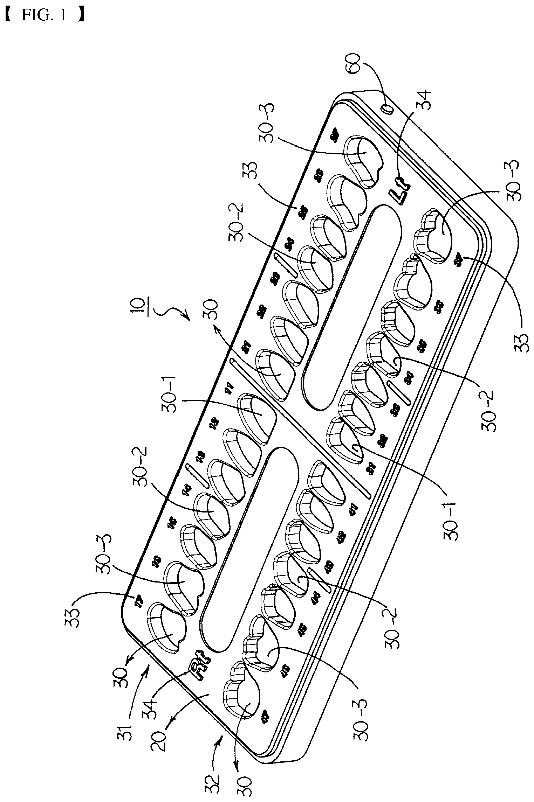

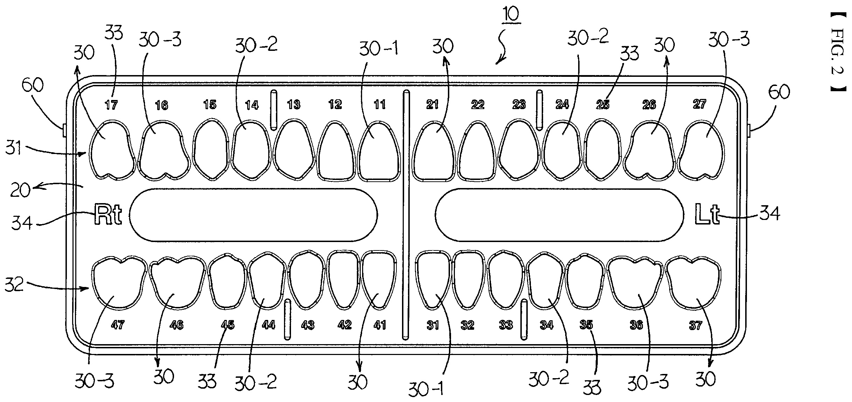

FIG. 1 is a perspective view illustrating an orthodontic bracket case 10 according to the present invention, and FIG. 2 is a plan view of FIG. 1. As illustrated, dual rows of recesses 30 are indented in a main body 20 constituting the bracket case 10.

The bracket case 10 is molded using synthetic resin, paper, or thin metal plate, for example.

The recesses 30 formed in the main body 20 are arranged to match with a set of teeth, and are shaped into the shapes of teeth according to the sequence of the set of teeth. In this way, orthodontic brackets 40 corresponding to the shapes of teeth may be received in the respective recesses 30.

More particularly, front tooth shaped recesses 30-1 are located at central positions of the bracket case 10, canine shaped recesses 30-2 are located at opposite sides of the front tooth shaped recesses, and molar shaped recesses 30-3 are located at both end positions.

Although it is preferable that upper teeth shaped ones of the recesses 30 constitute an upper row 31 of the bracket case 10 and lower teeth shaped ones of the recesses 30 constitute a lower row 32, the upper teeth shaped recesses 30 located at the upper row 31 and the lower teeth shaped recesses 30 located at the lower row 32 may be exchanged in positions.

The recesses 30 are designated by identification numbers 33 on the basis of the front shaped recesses 30-1 located at the central positions, which may assist an orthodontist in secondarily confirming the positions of the orthodontic brackets 40. Preferably, identification characters 34 for indication of left and right sides are provided at both sides of the main body 20.

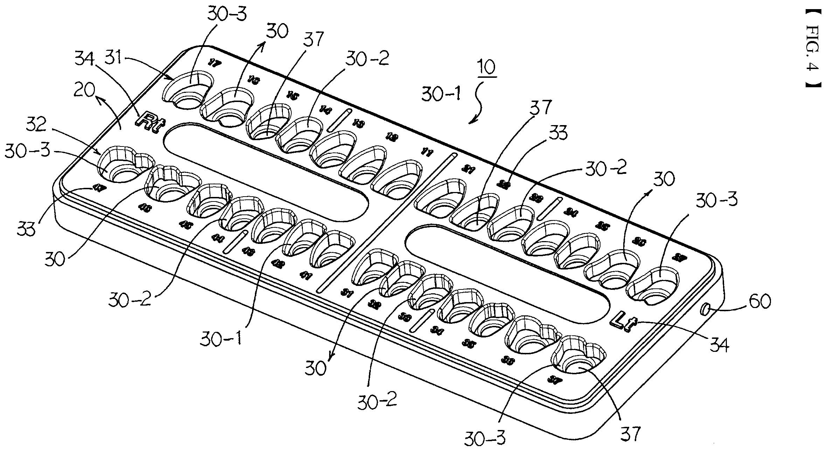

In an embodiment of the present invention, as shown in FIG. 4, a through-hole 37 is perforated in the center of a bottom 36 of each recess 30 and an adhesive tape 38 is attached to a lower surface of the bottom 36, such that the adhesive tape 38 may be exposed through the through-hole 37 of the recess 30. In this way, an adhesive portion 41 of the orthodontic bracket 40 may be attached to the adhesive tape 38, and a grip portion 42 may be exposed upward.

In this case, the adhesive tape 38 is preferably transparent, to assist the orthodontist in confirming an identification number (not shown) of the orthodontic brackets 40 attached to an upper surface of the adhesive tape 38.

In an embodiment of the present invention, instead of perforating the through-hole 37 in the bottom 36 of the recess 30, a double sided adhesive tape (not shown) may be attached and fixed to an upper surface of the bottom 36, and in turn the orthodontic bracket 40 may be attached to the double sided adhesive tape.

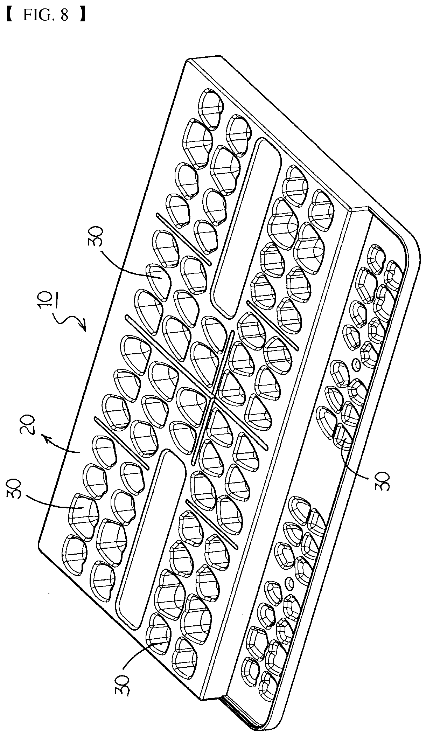

In an embodiment of the present invention, as shown in FIG. 8, the bracket case 10 may be configured such that the main body 20 has a larger size and tooth shaped recesses having different depths are indented in the main body 20.

An upper surface of the main body 20 of the bracket case 10 is covered with a transparent cover (not shown).

Reference numeral 60 denotes a cover holding boss.

The above description of the present invention is substantially equal to the previously described conventional bracket case in that the orthodontist picks up the desired orthodontic bracket 40 from the recess 30 of the bracket case 10 using a bracket holder (not shown) to bond the bracket to a tooth.

However, in the bracket case 10 according to the present invention, the recesses 30 of the main body 20 are shaped according to the sequence of the set of teeth, and also have the same shape as teeth. Accordingly, when attempting to select the orthodontic bracket 40 to be bonded to the teeth, it is possible to allow the orthodontist to easily and rapidly select and use the orthodontic bracket 40 received in the recess 30 having the same or similar shape as or to the tooth.

The recesses 30 of the upper row 31 and the recesses 30 of the lower row 32 have approximately the same or similar shape as or to the upper teeth and the lower teeth, which may allow the orthodontist to more easily and rapidly select the orthodontic bracket 40 that the orthodontist wishes to bond to a desired tooth.

In one example, when attempting to select the orthodontic bracket 40 that the orthodontist wishes to bond an upper front tooth, the orthodontist may select the orthodontic bracket 40 stored in the front tooth shaped recess 30-1 at the central position of the upper row 31 of the main body 20. In another example, when attempting to select the orthodontic brackets 40 that the orthodontist wishes to bond a canine and molar, the orthodontist may select the orthodontic brackets 40 stored in the canine shaped recess 30-2 and the molar shaped recess 30-3. In this way, it is possible to ensure that the orthodontist very easily selects the orthodontic bracket 40 to be bonded to a desired tooth.

As shown in FIG. 4, in the case in which the through-hole 37 is perforated in the bottom 36 of the recess 30, the adhesive tape 38 attached to the lower surface of the bottom is exposed through the through-hole 37, and the adhesive portion 41 of the orthodontic bracket 40 is attached and fixed to the adhesive tape 38, the orthodontic bracket 40 may be continuously stored in the recess 30 at a correctly aligned position. Accordingly, when the orthodontist attempts to pick up the orthodontic bracket 40 using the bracket holder, the orthodontist may easily pick up the bracket using the upwardly exposed grip portion of the bracket, which results in improvements in operation convenience and efficiency.

In this case, through provision of the transparent adhesive tape 38, it is possible to conveniently confirm the identification number of the orthodontic bracket 40 adhesively stored in the recess 30 through the bottom of the bracket case 10.

The identification numbers 33 designated to the respective recesses 30 assist the orthodontist in secondarily confirming the orthodontic brackets 40 as necessary, in addition to primarily confirming the orthodontic brackets from the shape of the recesses 30. This allows the operator to accurately select the orthodontic brackets 40. In particular, the identification characters 34 for identification of the left and right sides may enable more rapid identification and selection of the orthodontic brackets 40.

As described above, according to the present invention, the orthodontic bracket case is configured such that recesses for storage of orthodontic brackets are formed in a case main body according to the sequence of a set of teeth and have the same or similar shape as or to the shapes of teeth, such that brackets corresponding to teeth that have the same shape of the respective recesses are stored in the recesses. With this configuration, easy and rapid selection of the orthodontic brackets, and consequently improvements in operation convenience and efficiency may be accomplished.

## Claims

1. An orthodontic bracket case (10) comprising a plurality of recesses (30) formed in a main body for storage of orthodontic brackets (40) therein, **characterised in that**:
the recesses (30) formed in the main body have the same shape as teeth; and
the recesses (30) include front tooth shaped recesses (30-1) at central positions, canine shaped recesses (30-2) at opposite sides of the front tooth shaped recesses (30-1), and molar shaped recesses (30-3) at both sides of the canine shaped recesses (30-2), which are sequentially arranged according to the sequence of a set of teeth;
such that the orthodontic brackets (40) corresponding to the shape of the recesses (30) are stored in the recesses (30), to enable easy and rapid selection of the orthodontic brackets (40).

2. The orthodontic bracket case (10) according to claim 1, comprising a through-hole (37) perforated in a bottom (36) of each recess (30), such that an adhesive tape (38) may be attached to a lower surface of the bottom (36) provided with the perforated through-hole (37), such that the adhesive tape (38) may be exposed through the through-hole (37) of the bottom (36) of the recess (30) and a corresponding one of the orthodontic brackets (40) attached to the adhesive tape (38) at an aligned position.

3. The orthodontic bracket case (10) according to claim 2, including the adhesive tape (38) so attached.

4. The orthodontic bracket case (10) of any preceding claim, including at least one of the orthodontic brackets (40) stored therein.

## Patentansprüche

1. Gehäuse (10) für kieferorthopädische Brackets mit mehreren in einem Hauptkörper ausgebildeten Vertiefungen (30) zum Aufbewahren von kieferorthopädischen Brackets (40) darin, **dadurch gekennzeichnet, dass**:
die in dem Hauptkörper ausgebildeten Vertiefungen (30) die gleiche Form wie Zähne aufweisen und
zu den Vertiefungen (30) vorderzahnförmige Vertiefungen (30-1) in mittleren Positionen, eckzahnförmige Vertiefungen (30-2) auf gegenüberliegenden Seiten der vorderzahnförmigen Vertiefungen (30-1) und backenzahnförmige Vertiefungen (30-3) auf beiden Seiten der eckzahnförmigen Vertiefungen (30-2) gehören, die der Reihenfolge bei einem Gebiss entsprechend der Reihe nach angeordnet sind,
so dass zwecks Ermöglichen einer einfachen und schnellen Auswahl der kieferorthopädischen Brackets (40) die der Form der Vertiefungen (30) entsprechenden kieferorthopädischen Brackets (40) in den Vertiefungen (30) gelagert sind.

2. Gehäuse (10) für kieferorthopädische Brackets nach Anspruch 1 mit einer so durch einen Boden (36) jeder Vertiefung (30) hindurchgehenden Durchgangsbohrung (37), dass ein Klebeband (38) so an einer unteren Fläche des mit der dort hindurchgehenden Durchgangsbohrung (37) versehenen Bodens (36) angebracht werden kann, dass das Klebeband (38) durch die Durchgangsbohrung (37) am Boden (36) der Vertiefung (30) freiliegen und ein entsprechendes der kieferorthopädischen Brackets (40) in einer ausgerichteten Position an dem Klebeband (38) angebracht werden kann.

3. Gehäuse (10) für kieferorthopädische Brackets nach Anspruch 2 mit dem so angebrachten Klebeband (38).

4. Gehäuse (10) für kieferorthopädische Brackets nach einem der vorhergehenden Ansprüche mit mindestens einem darin gelagerten kieferorthopädischen Bracket (40).

## Revendications

1. Boîtier (10) pour attaches orthodontiques comportant une pluralité d'évidements (30) formés dans un corps principal à des fins de stockage d'attaches orthodontiques (40) dans ceux-ci, **caractérisé en ce que** :
les évidements (30) formés dans le corps principal ont la même forme que des dents ; et
les évidements (30) comprennent des évidements en forme de dents de devant (30-1) au niveau de positions centrales, des évidements en forme de canines (30-2) au niveau de côtés opposés des évidements en forme de dents de devant (30-1), et des évidements en forme de molaires (30-3) au niveau des deux côtés des évidements en forme de canines (30-2), qui sont agencés de manière séquentielle en fonction de la séquence d'un assortiment de dents ;
de telle sorte que les attaches orthodontiques (40) correspondant à la forme des évidements (30) sont stockées dans les évidements (30), pour permettre une sélection facile et rapide des attaches orthodontiques (40).

2. Boîtier (10) pour attaches orthodontiques selon la revendication 1, comportant un trou traversant (37) perforé dans un fond (36) de chaque évidement (30), de telle sorte qu'un ruban adhésif (38) peut être attaché au niveau d'une surface inférieure du fond (36) comportant le trou traversant perforé (37), de telle sorte que le ruban adhésif (38) peut être exposé au travers du trou traversant (37) du fond (36) de l'évidement (30) et qu'une attache correspondante des attaches orthodontiques (40) peut être attachée au ruban adhésif (38) au niveau d'une position alignée.

3. Boîtier (10) pour attaches orthodontiques selon la revendication 2, comprenant le ruban adhésif (38) ainsi attaché.

4. Boîtier (10) pour attaches orthodontiques selon l'une quelconque des revendications précédentes, comprenant au moins l'une des attaches orthodontiques (40) stockées dans celui-ci.
